# EUROPÄISCHE PATENTANMELDUNG

(11) **EP 0 101 404 A2**
(43) Veröffentlichungstag der Anmeldung: **22.02.1984**
(21) Anmeldenummer: 83810263.0
(22) Anmeldetag: 16.06.1983
(51) Int. Cl.: C07F 7/22, A01N 55/04

(54) **Organozinnester mit acylierten Aminocarbonsäuren und ihre Verwendung als Schädlingsbekämpfungsmittel**

(30) Priorität: 22.06.1982 CH 3820/82
(71) Anmelder: CIBA-GEIGY AG, 4002 Basel (CH)
(72) Erfinder: Hubele, Adolf, Dr., CH-4312 Magden (CH); Riebli, Peter, CH-4446 Buckten (CH)

(57) **Zusammenfassung**

Es werden neue zinnorganische Verbindungen der Formel I beschrieben 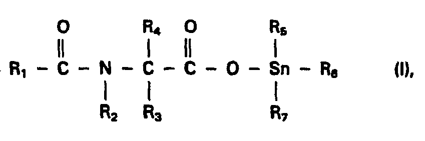 worin
R, gegebenenfalls substituiertes Niederalkyl, Niederalkenyl, Cycloalkyl, Furyl oder Tetrahydrofuryl bedeutet;
R₂ gegebenenfalls substituiertes Aryl darstellt;
R₃ und R₄ unabhängig voneinander für Wasserstoff oder gegebenenfalls substituiertes Niederalkyl stehen; und
R₅, Rₑ und R₇ unabhängig voneinander gegebenenfalls substituiertes Niederalkyl, Cycloalkyl oder Aryl repräsentieren.

Es werden ferner Methoden zur Herstellung dieser Produkte offenbart sowie Schädlingsbekämpfungsmittel, die als Wirkstoff eine dieser Verbindungen enthalten. Darüberhinaus wird ein Verfahren zur Bekämpfung von Pflanzenschödlingen beschrieben, das auf dem Einsatz der genannten Wirkstoffe bzw. der daraus hergesteellten Mittel beruht.

## Beschreibung

Die vorliegende Erfindung betrifft neue, zinnorganische Verbindungen der nachstehenden Formel I. Sie betrifft auch deren Herstellung sowie Schädlingsbekämpfungsmittel, die mindestens eine dieser Substanzen als Aktivkomponente enthalten. Diese Erfindung betrifft ferner die Herstellung der genannten Mittel und die Verwendung der Mittel und/ oder der neuen Wirksubstanzen zur Bekämpfung von Schädlingen im Agrarbereich, beispielsweise von pflanzen- und vorratssehädigenden Pilzen, Bakterien und/oder Insekten.

Die erfindungsgemässen neuen, zinnorganischen Verbindungen besitzen der Formel I 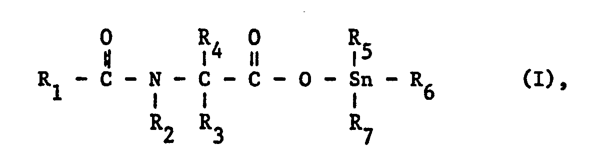 worin
R₁ gegebenenfalls substituiertes Niederalkyl, Niederalkenyl, Cycloalkyl, Furyl oder Tetrahydrofuryl bedeutet;
R₂ gegebenenfalls substituiertes Aryl darstellt;
R₃ und R₄ unabhängig voneinander für Wasserstoff oder gegebenenfalls substituiertes Niederalkyl stehen; und
R₅, R₆ und R₇ unabhängig voneinander gegebenenfalls substituiertes Niederalkyl, Cycloalkyl oder Aryl repräsentieren.

Der Zusatz "Nieder" vor einem aliphatischen Substituenten soll hier und im folgenden einen geradkettigen oder verzweigten Rest mit maximal 8 Kohlenstoffatomen charakterisieren. So steht Niederalkyl vorzugsweise für C₁-C₈-Alkyl wie Methyl, Ethyl, Propyl, Butyl, Pentyl, Hexyl, Heptyl oder Octyl sowie ihre Isomeren, wie Isopropyl, Isobutyl, tert.-Butyl, Isopentyl usw..Niederalkenyl bedeutet insbesondere C₂-C₈-Alkenyl wie z.B. Vinyl, Propenyl-(1), Allyl, Butenyl-(l), Butenyl-(2), Butenyl-(3) usw., sowie gerade oder verzweigte Ketten mit mehreren Doppelbindungen. Cycloalkyl steht hier und im folgenden vor allem für C₃-C₇-Cycloalkyl wie z.B. für Cyclopropyl, Cyclobutyl, Cyclopentyl, Cyclohexyl; Cycloheptyl usw., bevorzugt für Cyclopropyl, Cyclopentyl und Cyclohexyl. Furyl steht bevorzugt für 2-Furyl, Tetrahydrofuryl bevorzugt für 2-Tetrahydrofuryl. Aryl bedeutet vorzugsweise Phenyl oder Naphthyl, wobei Naphthyl sowohl α-Naphthyl als auch β-Naphthyl umfasst.

Unter einer substituierten Niederalkylgruppe soll eine geradkettige oder verzweigte C₁-C₆-Alkylgruppe verstanden werden, insbesondere Propyl, Ethyl und besonders bevorzugt Methyl, wobei als Substituenten dieser Niederalkylgruppen z.B. folgende Reste bevorzugt sind: Hydroxy; C₁-C6-Alkoxy, vorzugsweise Cₗ₋C₄₋Alkoxy, insbesondere Ethoxy und Methoxy; C₃₋C₄₋Alkenyloxy, insbesondere Allyloxy; C₃-C₆-Alkinyloxy, insbesondere Propargyloxy; C₁-C₃-Alkoxy-(C₁-C₃-alkoxy) wie CH₃OCH₂CH₂O oder CH₃0CH₂0; Cₗ₋C₆₋Alkylthio, vorzugsweise C₁-C₄-Alkylthio, insbesondere Ethylthio und Methylthio; Cl-C4-Alkylsulfonyloxy, insbesondere OSO₂C₂H₅ und OSO₂CH₃, bevorzugt OSO₂CH₃; C₁-C₄-Alkylaminosulfonyloxy wie OSO₂NH(C₁-C₃-alkyl), ^{z}.B. OSO₂NHC₃H₇, OSO₂NAC₂H₅ oder insbesondere OSO₂NHCH₃; Cₗ₋C₄₋Alkylsulfonyl, insbesondere -SO₂C₂H₅ und -SO₂CH₃; C₁-C₄-Alkylsulfoxy, insbesondere -SOC₂H₅ und SOCH₃; Halogen wie Fluor, Chlor, Brom, Jod, bevorzugt Chlor; Phenyl; Phenoxy; Benzyloxy; Azolyl wie Triazolyl oder Imidazolyl, bevorzugt lH-l,2,4-Triazolyl und 1H-Imidazolyl. Besonders bevorzugte Substituenten für die Niederalkenyl-und Cycloalkylgruppen sind: Halogenatome wie Fluor, Chlor, Brom oder Jod, insbesondere Chlor oder Brom. Bevorzugte Substituenten für Furyl und Tetrahydrofuryl sind vor allem Halogen (insbesondere Brom), Cₗ-C4-Alkoxy (insbesondere Ethoxy und Methoxy) sowie die Nitrogruppen. Besonders bevorzugte Substituenten für Arylreste sind: Halogenatome wie Fluor, Chlor, Brom oder Jod, insbesondere Chlor oder Brom, sowie C₁-C₃- _{Al}koxy, insbesondere Methoxy; C₁-C₃-Alkyl, insbesondere Methyl und C₁-C₃-Haloalkyl, insbesondere Trifluormethyl, wobei gleiche oder verschiedene Substituenten nebeneinander auftreten können. Als besonders bevorzugte Reste für die -Sn(R₅)(R₆)(R₇)-Gruppe gelten C₁-C₆-Alkyl, insbesondere Methyl, Butyl und Cyclohexyl, sowie vor allem die Phenylgruppe, wobei ganz besonders diejenigen Gruppierungen bevorzugt sind, bei denen R₅, R₆ und R₇ identisch sind. Als Reste R₃ und R₄ sind Wasserstoff, C₁-C₄-Alkyl, gegebenenfalls durch Halogen (insbesondere Chlor oder Brom), Hydroxy, Mercapto, C₁-C₄-Alkoxy, C₁-C₄-Alkylthio, C₁-C₃-Alkoxy-(C₁-C₃-alkoxy), C₁-C₃-Alkoxy-(C₁-C₃-alkylthio),C₁-C₄-Alkylearbonyloxy, Cₗ-C₄₋Carbamoyloxy oder C₁-C₄-Alkoxycarbonyloxy substituiertes C₁-C₃- Alkyl bevorzugt. Besonders bevorzugt sind Kombinationen, bei denen einer der Reste R₃ oder R₄ für Wasserstoff steht.

Allgemein soll unter dem Begriff Alkyl selbst oder als Bestandteil eines anderen Substituenten je nach Zahl der angegebenen Kohlenstoffatome beispielsweise folgende Gruppen verstanden werden: Methyl, Ethyl, Propyl, Butyl, Pentyl, Hexyl, Heptyl, Octyl usw. sowie ihre Isomeren, wie z.B. Isopropyl, Isobutyl, tert.-Butyl, Isopentyl usw.. Haloalkyl steht für einen einfach bis perhalogenierten Alkylsubstituenten, wie z.B. CHCl₂, ^{C}H^{F}₂, CH₂Cl, CC1₃, CH₂F, CH₂CH₂Cl, CHBr₂ usw., insbesondere CF₃. Unter Halogen soll hier und im folgenden Fluor, Chlor, Brom oder Jod, vorzugsweise Fluor, Chlor oder Brom, verstanden werden. Alkenyl bedeutet z.B. Propenyl-(l), Allyl, Butenyl-(l), Butenyl-(2) oder Butenyl-(3).

Die Verbindungen der Formel I sind bei Raumtemperatur stabile Oele, Harze oder überwiegend Feststoffe, die sich durch sehr wertvolle mikrobizide und wuchsregulierende Eigenschaften auszeichnen. Sie lassen sich auf dem Agrarsektor oder verwandten Gebieten präventiv und kurativ zur Bekämpfung von Schädlingen, wie z.B. Insekten, Bakterien und insbesondere phytopathogenen Pilzen, einsetzen, dabei sind die 2,6-disubstituierten Anilinderivate im Umfang der Formel I bevorzugt. Die erfindungsgemässen Wirkstoffe der Formel I zeichnen sich durch eine sehr gute Verträglichkeit bei Kulturpflanzen und eine hohe Aktivität gegenüber gewisse Chemikalien-resistente Oomyceten-Pilzstämmen aus.

Aufgrund ihrer ausgeprägten Aktivität gegenüber Pflanzenschädlingen sind folgende Untergruppen von Verbindungen der Formel I in zunehmender Reihenfolge bevorzugt:
Gruppe Ia, bestehend aus Verbindungen der Formel I, worin
R₁ für ein durch Chlor, Methoxy, Ethoxy, CH₂=CHCH₂O-, HC≡CCH₂O-, CH₃OCH₂O-, Methylsulfonyl, Methylsulfonyloxy, Methylaminosulfonyloxy, Methylthio oder 1H-1,2,4-Triazolyl substituiertes Methyl, für C₂₋C₄₋Alkenyl, durch Chlor substituiertes C₂-C₄-Alkenyl, C₃-C₆-Cycloalkyl, unsubstituiertes 2-Tetrahydrofuryl oder unsubstituiertes oder durch Brom substituiertes 2-Furyl steht;
R₂ ein in beiden ortho-Positionen und gegebenenfalls zusätzlich in metha-Position durch Chlor, Methyl, Methoxy, -CF₃ und/oder Nitro substituiertes Phenyl oder ein in ortho-Stellung durch Chlor, Methyl, Methoxy, -CF₃ oder Nitro substituiertes a-Naphthyl bedeutet; R3 für Wasserstoff, C₁-C₂-Alkyl, Hydroxyethyl, Methoxyethyl, Methoxymethyl oder Chlorethyl steht;
R₄ Wasserstoff bedeutet; und R₅, R₆ und R₇ unabhängig voneinander Methyl, n-Butyl, Cyclohexyl oder Phenyl bedeuten.
Gruppe Ib, bestehend aus Verbindungen der Formel I, worin R₁ für ein durch Chlor, Methoxy, Ethoxy, CH₂=CHCH₂O-, HC≡CGH₂O-, Methoxymethoxy oder 1H-1,2,4-Triazolyl, substituiertes Methyl, für Cyclopropyl, 2-Furyl oder 2-Tetrahydrofuryl steht;
_{R2} ein durch Chlor, Methyl, Methoxy, CF₃ und/oder Nitro diortho-substituiertes Phenyl bedeutet;
R₃ für Wasserstoff, C₁-C₂-Alkyl, Hydroxyethyl, Methoxyethyl, Methoxymethyl oder Chlorethyl steht;
R₄ Wasserstoff bedeutet; und R₅, R₆ und R₇ unabhängig voneinander für Methyl, n-Butyl, Cyclohexyl oder Phenyl stehen.

Gruppe Ic, bestehend aus Verbindungen der Formel I, worin R₁ für Methoxymethyl steht; R₂ ein durch Chlor, Methyl, Methoxy, CF₃ und/oder Nitro diortho-substituiertes Phenyl bedeutet; R₃ für Methyl oder Hydroxymethyl steht; R₄ Wasserstoff bedeutet und R₅, R₆ und R₇ unabhängig voneinander für C₁-C₄-Alkyl, C₃₋C₆-Cycloalkyl oder Phenyl stehen.

Gruppe Id, bestehend aus Verbindungen der Formel I, worin R₁ für Methoxymethyl steht; R₂ 2,6-Dimethylphenyl bedeutet; R₃ für Methyl oder Hydroxymethyl steht; R₄ Wasserstoff bedeutet und R₅, R₆ und R₇ für Cₗ₋C₄₋Alkyl oder Phenyl stehen.

Aufgrund ihrer ausgeprägten Aktivität gegen Pflanzenschädlinge sind folgende Einzelsubstanzen besonders bevorzugt:
N-(l'-Triphenylzinnoxycarbonylethyl)-N-methoxyacetyl-2,6-dimethylanilin, N-[1'-Triphenylzinnoxycarbonyl-(prop-3-ol-lyl)]-N-methoxyacetyl-2,6-dimethylanilin,
N-(1'-Trimethylzinnoxycarbonylethyl)-N-methoxyacetyl-2,6-dimethylanilin,
N-[1'-Tri-n-butylzinnoxycarbonyl-(prop-3-ol-1-yl)]-N-methoxyacetyl-2,6-dimethylanilin,
N-(1'-Tri-n-butylzinnoxycarbonylethyl)-N-methoxyacetyl-2,6-dimethylanilin,
N-[1'-Trimethylzinnoxycarbonyl-(prop-3-ol-1-yl)]-N-methoxyacetyl-2,6-dimethylanilin.

Die Verbindungen der Formel I werden erfindungsgemäss
A) durch Reaktion einer Verbindung der Formel II 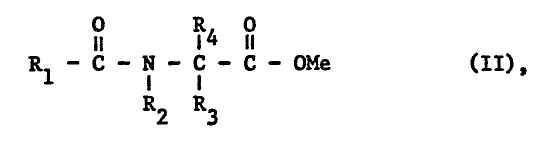 worin _{R1}, R₂, R₃ und R₄ wie unter Formel I definiert sind und Me für Wasserstoff , ein Metallatom, bevorzugt Alkali- oder Erdalkalimetallatom, wie Li, Na, K, Ca, Mg usw. steht, mit einem Triorganylzinnhalogenid der Formel III 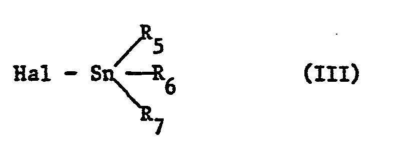 hergestellt, worin R₅, R₆ und R₇ wie unter Formel I definiert sind und Hal für Halogen, insbesondere Chlor oder Brom, bevorzugt Chlor, steht und wobei in den Fällen, in denen Me Wasserstoff bedeutet, die Reaktion vorzugsweise in Gegenwart eines säurebindenden Mittels durchgeführt wird; oder
B) durch N-Acylierungs-Reaktion einer Verbindung der Formel IV 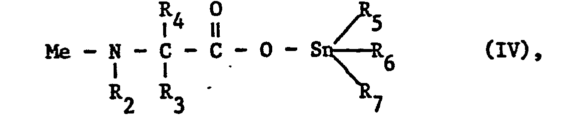 worin die Substituenten R₂, R₃, R₄, R₅, R₆ und R wie unter Formel I definiert sind und Me für Wasserstoff oder bevorzugt ein Metallatom, insbesondere ein Alkali- oder Erdalkalimetallatom wie Li, Na, K, Ca, Mg usw. steht, gegebenenfalls in Gegenwart eines säurebindenden Mittels mit einem reaktionsfähigen Säurederivat der Formel V 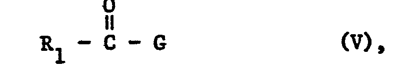 worin R₁ wie unter Formel I definiert ist und G für die Gruppe R₁-COO-, eine freie oder derivatisierte Hydroxygruppe oder vorzugsweise ein Halogenatom, insbesondere Chlor oder Brom steht; oder
C) durch Reaktion einer Verbindung der Formel VI 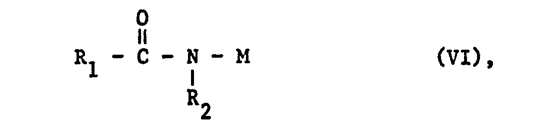 worin R₁ und R₂ wie unter Formel I definiert sind und M für Wasserstoff oder ein Alkalimetallatom, vorzugsweise Kalium oder Natrium steht, mit einer Verbindung der Formel VII 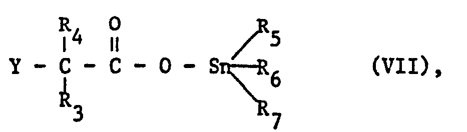 worin R₃, R₄, R₅, R₆ und R₇ wie unter Formel I definiert sind und Y für eine übliche nukleofuge Abgangsgruppe steht, wobei als nukleofuge Abgangsgruppe Substituenten wie Halogen, insbesondere Chlor, Brom, Jod oder reaktive veresterte Hydroxygruppen wie Arylsulfonyloxy- oder Alkylsulfonyloxy- oder Acyloxygruppierungen, z.B. Benzolsulfonyloxy, p-Tosyloxy, Trifluoracetyloxy oder bevorzugt Niederalkylsulfonyloxy wie Mesyloxy, eingesetzt werden; und eine verfahrensgemäss erhältliche Verbindung der Formel I in eine andere Verbindung der Formel I umwandelt; z.B. eine nitrierte Verbindung durch Hydrierung in eine Aminoverbindung, eine nicht-halogenierts in eine halogenierte Verbindung, letztere in eine andere halogenierte Verbindung oder ein z.B. gemäss Variante A hergestelltes Produkt der Formel Ia 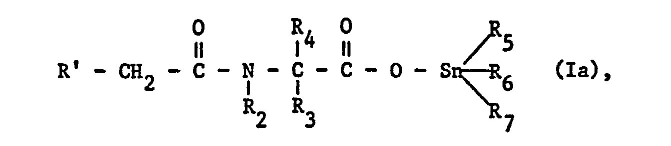 worin R' für Halogen oder eine freie oder veresterte Hydroxy- oder Mercaptogruppe steht und die übrigen Substituenten wie unter Formel I definiert sind, mit einer der nachfolgenden Verbindungen der Formeln VIIIa bis VIIId 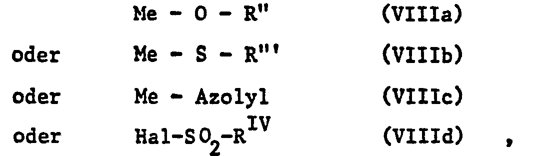 worin Me vorzugsweise für ein Alkalimetallatom, insbesondere Kalium oder Natrium steht, R₂ insbesondere für C₁-C₆-Alkyl, C₃-C₄₋Alkenyl, C₃-C₆-Alkinyl, Phenyl, Benzyl oder C₁-C₃-Alkoxy-(C₁-C₃-alkyl) steht; R"' insbesondere C₁-C₆-Alkyl bedeutet; Azolyl bevorzugt für 1H-Imidazolyl oder lH-l,2,4-Triazolyl steht; R^{IV} insbesondere für eine durch C₁-C₄-Alkyl substituierte Aminogruppe steht und Hal Halogen, bevorzugt Chlor oder Brom bedeutet, in ein entsprechendes Produkt der Formel I überführt, wobei Produkte mit einer Schwefelbrücke nachträglich auch weiteroxidiert werden können.

Andere Umwandlungen von Verbindungen der Formel I in weitere Verbindungen der Formel I sind z.B. die Reaktionen von Verbindungen der Formel Ib 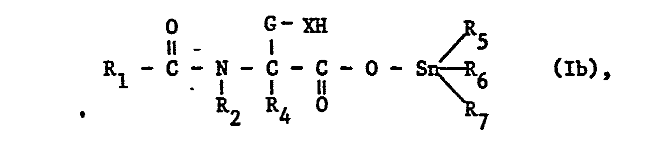 worin die Substituenten R₁, R₂₉ R₄, R₅, R₆ und R₇ wie unter Formel I dafiniert sind, G für eine Cₗ₋C₄₋Alkylenbrücke steht und X für Sauerstoff oder Schwefel steht, mit vorzugsweise einer der folgenden Verbindungen der Formeln IXa oder IXb 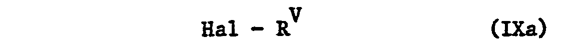 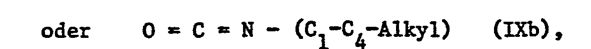 worin Hal für ein Halogenatom, bevorzugt Chlor oder Brom steht und R^{V} vorzugsweise Cₗ₋C₄₋Alkyl, C₂₋C₆₋Alkoxyalkyl, Cₗ-C₄₋Alkylcarbonyl, C₁-C₄-Carbamoyl oder Cₗ₋C₄₋Alkoxycarbonyl bedeutet. Darüberhinaus sind weitere Umwandlungen durchführbar, so können derartige Umwandlungsreaktionen auch an den Zwischenprodukten II, IV oder VII durchgeführt werden, bevor diese zu den Endprodukten weiterreagieren.

Die Herstellungsvariante A wird im allgemeinen bei Temperaturen von 0° bis 80°C, vorzugsweise 10° bis 30°C; Variante B bei 0° bis 180°C, vorzugsweise 20° bis 120°C bzw. der Rückflusstemperatur des Reaktionsmediums und die Variante C bei 20° bis 130°C, vorzugsweise 80° bis 120°C bzw. der Rückflusstemperatur des Reaktionsmediums durchgeführt. Bei den Varianten A, B und C ist die Verwendung von säurebindenden Mitteln vorteilhaft. Als solche kommen organische und anorganische Basen in Betracht, z.B. tertiäre Amine wie Trialkylamine (Trimethylamin, Triethylamin, Tripropylamin usw.), Pyridin und Pyridinbasen (4-Dimethylaminopyridin, 4-Pyrrolidylaminopyridin usw.), Oxide und Hydroxide, Carbonate und Hydrogencarbonate von Alkali- und Erdalkalimetallen sowie Alkaliacetate.

Entstehender Halogenwasserstoff kann in manchen Fällen auch mittels Durchleiten von Inertgas, z.B. Stickstoff, aus dem Reaktionsgemisch vertrieben werden.

Die Reaktionen werden vorteilhafterweise in Anwesenheit von reaktionsinerten Lösungs- oder Verdünnungsmitteln durchgeführt. In Frage kommen beispielsweise aliphatische und aromatische Kohlenwasserstoffe wie Benzol, Toluol, Xylole, Petrolether; halogenierte Kohlenwasserstoffe wie Chlorbenzol, Methylenchlorid, Ethylenchlorid, Chloroform, Tetrachlorkohlenstoff, Tetrachlorethylen; Ether und etherartige Verbindungen wie Dialkylether (Diethylether, Diisopropylether, tert.-Butylmethylether usw.), Anisol, Dioxan, Tetrahydrofuran; Nitrile wie Acetonitril, Propionitril; z.T. N,N-alkylierte Amide wie Dimethylformamid; Dimethylsulfoxid; Ketone wie Aceton, Diethylketon, Methylethylketon und Gemische solcher Lösungsmittel untereinander. In manchen Fällen kann das Acylierungsmittel selbst als Lösungsmittel dienen. Bei der Variante A darf vorteilhafterweise zusätzlich Wasser anwesend sein.

Bei den Acylierungen kann die Gegenwart eines Reaktionskatalysators wie Dimethylformamid von Vorteil sein.

Die Ausgangssubstanzen der Formeln III, V, VI, VIIIa bis VIIId sowie IXa und IXb sind bekannt und grösstenteils käuflich. Die Verbindungen der Formel VII sind analog zu Herstellungsvariante A durch Umsetzung aus den zugrundeliegenden Säuren mit Triorganylzinnhalogeniden der Formel III zugänglich. Die Verbindungen der Formel II sind teilweise bekannt oder können nach an sich bekannten Methoden aus den Grundaniliden bzw. -anilinen hergestellt werden.

Das beschriebene Herstellungsverfahren ist in allen Teilen ein Bestandteil dieser Erfindung.

In den Fällen, in denen die Substituenten R₃ und R₄ nicht gleich sind, z.B. R₃ = CH₃ und R₄ - H, besitzen die Verbindungen der Formel I am Verknüpfungskohlenstoffatom von R₃ und R₄ ein Asymmetriezentrum und fallen üblicherweise bei der Herstellung als Racemate an, die entweder anschliessend auf übliche Art in die optischen Antipoden gespalten werden können oder sich durch Verwendung von optisch reinen Ausgangsstoffen als optisch reine Antipoden synthetisieren lassen. So kann ein optisch reines Anilid der Formel II z.B. durch Reaktion einer optisch reinen a-Halogencarbonsäure Hal-C(R₃)(R₄)-COOH und dem entsprechenden Acylanilid hergestellt und durch Umsetzung genäss Variante A in das optisch reine Isomere der Formel I überführt werden. Je nach Substitution können weitere Asymmetriezentren auftreten. Unabhängig von der genannten optischen Isomerie wird z.T. auch eine Atropisomerie um die (Aryl-N")-Achse beobachtet.

Die optischen Antipoden I zeigen unterschiedliche biozide Aktivitäten. Im allgemeinen genügt für den praktischen Einsatz die Verwendung der Racemate, obgleich reine Antipoden zu einer Herabsetzung der aktiven Dosis führen können.

Es wurde überraschend gefunden, dass die erfindungsgemässen zinnorganischen Verbindungen der Formel I eine für den praktischen Einsatz auf dem Agrargebiet, im Gartenbau und auf verwandten Gebieten günstige Aktivität gegen wichtige phytopathogene Schädlinge aufweisen und sich daher zum Schutz von wachsenden und lagernden Kulturpflanzen eignen. Ihr Wirkungsspektrum reicht von schädlichen Mikroorganismen wie Pilzen und Bakterien bis zu Insekten. Sie besitzen sehr vorteilhafte kurative, systemische und insbesondere präventive Eigenschaften und lassen sich zum Schutz von zahlreichen Kulturpflanzen einsetzen. Mit den Wirkstoffen der Formel I können an Pflanzen oder an Pflanzenteilen (Früchte, Laubwerk, Stengel, Knollen, Wurzeln) von unterschiedlichen Nutzkulturen die auftretenden Mikroorganismen eingedämmt oder vernichtet werden, wobei auch später zuwachsende Pflanzenteile von derartigen Schädlingen, insbesondere phytopathogenen Mikroorganismen, verschont bleiben. Die Mikrobizidwirkung umfasst auch Mikroorganismen, die bei der Vorratshaltung von pflanzlichem und tierischem Material eine entscheidende Rolle spielen.

Wirkstoffe der Formel I sind gegen eine ganze Reihe von phytopathogenen Schädlingen aktiv, so z.B. gegen die den folgenden Klassen angehörenden Pilze: Ascomyceten (z.B. Eryphe und Venturia); Fungi imperfecti (z.B. Botrytis, Helminthosporium, Fusarium, Cercospora); Basidiomycetes (z.B. Hemileia, Rhizoctonia, Puccinia); insbesondere jedoch gegen die der Klasse der Phycomyceten angehörenden Oomyceten wie Peronosperales (Phytophthora, Pythium, Plasmopara), wobei überraschend auch Acylanin-resistente Pilzstämme erfolgreich bekämpft werden können. Ferner wirken Verbindungen der Formel I gegen wichtige Schimmelpilze im Vorratsschutz (z.B. Penicillium, Aspergillus, Rhizopus, Nigrospora) sowie Bakterien wie Buttersäurebakterien und Xanthomonas Spezies und Hefen wie Candida. Eine Reihe der Wirkstoffe zeigt auch eine ausgeprägte Insektizidwirkung. Sie können ferner als Beizmittel zur Behandlung von Saat- und Vorratsgut (Früchte, Knollen, Körner) und Pflanzenstecklingen zum Schutz vor Pilzinfektionen sowie gegen im Erdboden auftretende phytopathogene Pilze und Bakterien eingesetzt werden.

Die Erfindung betrifft somit auch Schädlingsbekämpfungsmittel sowie die Verwendung der Verbindungen der Formel I zur Bekämpfung phytopathogener Schädlinge, wie Insekten, Bakterien, insbesondere pflanzenschädigender Pilze bzw. die präventive und kurative Verhütung eines Befalls an Pflanzen.

Darüberhinaus schliesst die vorliegende Erfindung auch die Herstellung der Schädlingsbekämpfungsmittel ein, die gekennzeichnet ist durch das innige Vermischen der Aktivsubstanz mit einem oder mehreren hierin beschriebenen Substanzen bzw. Substanzgruppen. Eingeschlossen ist auch ein Verfahren zur Behandlung von Pflanzen, das sich durch Applikation der Verbindungen der Formel I bzw. der neuen Mittel auszeichnet.

Als Zielkulturen für die hierin offenbarten Indikationsgebiete gelten im Rahmen dieser Erfindung beispielsweise folgende Pflanzenarten: Getreide: (Weizen, Gerste, Roggen, Hafer, Reis, Sorghum und Verwandte); Rüben: (Zucker- und Futterrüben); Kern-, Stein- und Beerenobst: (Aepfel, Birnen, Pflaumen, Pfirsiche, Mandeln, Kirschen, Erd-, Him- und Brombeeren); Hülsenfrüchte: (Bohnen, Linsen, Erbsen, Soja); Oelkulturen: (Raps, Senf, Mohn, Oliven, Sonnenblumen, Kokos, Rizinus, Kakao, Erdnüsse); Gurkengewächse: (Kürbis, Gurken, Melonen); Fasergewächse: (Baumwolle, Flachs, Hanf, Jute); Citrusfrüchte: (Orangen, Zitronen, Pampelmusen, Mandarinen); Gemüsesorten: (Spinat, Kopfsalat, Spargel, Kohlarten, Möhren, Zwiebeln, Tomaten, Kartoffeln, Paprika); Lorbeergewächse: (Avocado, Cinnamonum, Kampfer) oder Pflanzen wie Mais, Tabak, Nüsse, Kaffee, Zuckerrohr, Tee, Weinreben, Hopfen, Bananen- und Naturkautschukgewächse sowie Zierpflanzen (Compositen).

Wirkstoffe der Formel I werden üblicherweise in Form von Zusammensetzungen verwendet und können gleichzeitig oder nacheinander mit weiteren Wirkstoffen auf die zu behandelnde Fläche oder Pflanze gegeben werden. Diese weiteren Wirkstoffe können sowohl Düngemittel, Spurenelement-Vermittler oder andere das Pflanzenwachstum beeinflussende Präparate sein. Es können aber auch selektive Herbizide, Insektizide, Fungizide, Bakterizide, Nematizide, Molluskizide oder Gemische mehrerer dieser Präparate sein, zusammen mit gegebenenfalls weiteren in der Formulierungstechnik üblichen Trägerstoffen, Tensiden oder anderen applikationsfördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde-, Düngemitteln oder auch Phospholipiden tierischer oder pflanzlicher Herkunft.

Ein bevorzugtes Verfahren zum Aufbringen eines Wirkstoffes der Formel I bzw. eines agrochemischen Mittels, das mindestens einen dieser Wirkstoffe enthält, ist das Aufbringen auf das Blattwerk (Blattapplikation). Anzahl der Applikationen und Aufwandmenge richten sich dabei nach dem Befallsdruck für den entsprechenden Erreger (Pilzsorte). Die Wirkstoffe der Formel I können aber auch über den Erdboden durch das Wurzelwerk in die Pflanze gelangen (systemische Wirkung), indem man den Standort der Pflanze mit einer flüssigen Zubereitung tränkt oder die Substanzen in fester Form in den Boden einbringt, z.B. in Form von Granulat (Bodenapplikation). Die Verbindungen der Formel I können aber auch auf Samenkörner aufgebracht werden (Coating), indem man die Körner entweder mit einer flüssigen Zubereitung des Wirkstoffs tränkt oder sie mit einer festen Zubereitung beschichtet. Darüberhinaus sind in besonderen Fällen weitere Applikationsarten möglich, so z.B. die gezielte Behandlung der Pflanzenstengel oder der Knospen.

Die Verbindungen der Formel I werden dabei in unveränderter Form oder vorzugsweise zusammen mit den in der Formulierungstechnik üblichen Hilfsmittel eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, durch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen liegen im allgemeinen bei 50 g bis 5 kg Aktivsubstanz (AS) je ha; bevorzugt 100 g bis 2 kg AS/h, insbesondere bei 200 g bis 600 g AS/h.

Die Formulierungen, d.h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen C₈ bis C_{12'} wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethyl- oder Ethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen. Geeignete anionische Tenside können sowohl sog. wasserlösliche Seifen, als auch wasserlösliche synthetische oberflächenaktive Verbindungen sein.

Als Seifen seien die Alkali-, Erdalkali-oder gegebenenfalls aubstituierte Ammoniumsalze von höheren Fettsäuren (C₁₀-C₂₂), wie z.B. die Na- oder K-Salze der Oel- oder Stearinsäure, oder von natürlichen Fettsäuregemischen, die z.B. aus Kokosnuss- oder Talgöl gewonnen werden können, genannt. Ferner sind auch die Fettsäure-methyllaurinsalze zu erwähnen.

Häufiger werden jedoch sog. synthetische Tenside verwendet, insbesondere Fettsulfonate, Fettsulfate, sulfonierte Benzimidazolderivate oder Alkylsulfonate.

Die Fettsulfonate oder -sulfate liegen in der Regel als Alkali-, Erdalkali- oder gegebenenfalls substituierte Ammoniumsalze vor und weisen einen Alkalirest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triethanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Ethylenoxyd-Adduktes in Frage.

Als nichtionische Tenside kommen in erster Linie Polyglykoletherderivate von aliphatischen oder cycloaliphatischen Alkoholen, gesättigten oder ungesättigten Fettsäuren und Alkylphenolen in Frage, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykolethergruppen und 10 bis 100 g Propylenglykolethergruppen enthaltenden Polyethylenoxidaddukte an Polypropylenglykol, Ethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Ethylenglykoleinheiten.

Als Beispiele nichtionischer Tenside seien Nonylphenolpolyethoxyethanole, Ricinusölpolyglykolether, Poylpropylen-Polyethylenoxydaddukte, Tributylphenoxypolyethylenethanol, Polyethylenglykol und Octylphenoxypolyethoxyethanol erwähnt.

Ferner kommen auch Fettsäureester von Polyoxyethylensorbitan wie das Polyoxyethylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Ethylsulfate vor, z.B. das Stearyltrimethylammoniumchlorid oder das Benzyldi(2-chlorethyl)ethylammoniumbromid.

Die in der Formulierungstechnik gebräuchlichen Tenside sind u.a. in folgenden Publikationen beschrieben:
"Mc Cutcheon's Detergents and Emulsifiers Annual" BC Publishing Corp., Ringwood New Jersey, 1980
Sisely and Wood, "Encyclopedia of Surface Active Agents", Chemical Publishing Co., Inc. New York, 1980.

Die agrochemischen Zubereitungen enthalten in der Regel 0,1 bis 99X, insbesondere 0,1 bis 95X Wirkstoff der Formel I, 99,9 bis 1%, insbesondere 99,8 bis 5% eines festen oder flüssigen Zusatzstoffes und 0 bis 25%, insbesondere 0,1 bis 25Z eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Derartige agrochemische Mittel sind ein Bestandteil der vorliegenden Erfindung.

Die nachfolgenden Beispiele dienen zur näheren Erläuterung der Erfindung, ohne dieselbe einzuschränken. Temperaturen sind in Celsiusgraden angegeben. Prozente und Teile beziehen sich auf das Gewicht, Darüberhinaus werden folgende Symbole verwendet: h = Stunde; d = Tag; min = Minute; RT - Raumtemperatur; N = Normalität; abs. = Absolut wasserfrei; DMSO = Dimtehylfulsoxid; DMF = Dimethylformamid. Druckangaben erfolgen in Millibar mb, oder Bar b.

### Herstellungsbeispiele

### Beispiel a: Herstellung von

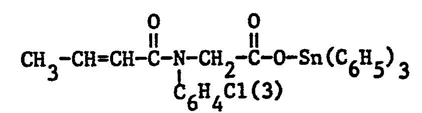

### N-Triphenylzinnoxycarbonylmethyl-N-crotyl-3-chloranilin

Eine Lösung von 9,8 Teilen Crotonsäure-(3-chloranilid) in 200 ml Dioxan wurde unter Durchleiten von Stickstoff und unter Rühren mit 2,4 Teilen einer 55Zigen Natriumhydrid-Dispersion versetzt und 2 h auf +80° erwärmt. Nach dem Abkühlen auf RT wurden unter Rühren innerhalb von 1 h 25,8 Teile Triphenylzinn-(2-bromacetat) portionsweise zugegeben, das Reaktionsgemisch auf +60° erwärmt, mit 800 ml Eiswasser verdünnt und dreimal mit jeweils 150 ml Methylenchlorid extrahiert. Die vereinigten Extrakte wurden zweimal mit je 50 ml Wasser gewaschen, über Natriumsulfat getrocknet, filtriert und das Lösungsmittel abgedampft. Der ölige Rückstand wurde in Petrolether digeriert und kristallisierte. Die beigen Kristalle wurden abfiltriert und getrocknet. Smp. 85-91°.

### Beispiel β: Herstellung von

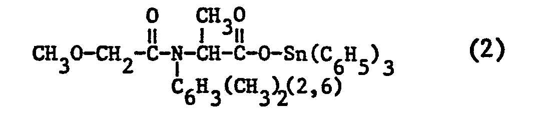

N-(1'-Triphenylzinnoxycarbonylethyl)-N-methoxyacetyl-2,6-dimethylanilin Zu einer Lösung von 13 Teilen des Natriumsalzes von N-(1'-Hydroxycar- bonylethyl)-N-methoxyacetyl-2,6-dimethylanilin in 150 ml Wasser wurden unter Rühren bei RT 15,8 Teile Triphenylzinnchlorid in 150 ml Methylenchlorid zugetropft und 7 h weitergerührt. Anschliessend wurde die organische Phase abgetrennt, dreimal mit jeweils 50 ml Wasser gewaschen, über Molekularsieb getrocknet, filtriert und das Lösungsmittel im Vakuum entfernt. Der kristalline Rückstand wurde über Aktivkohle aus 200 ml Cyclohexan umkristallisiert. Die farblosen Kristalle zeigten einen Smp. von 129-130°.

### Beispiel y: Herstellung von

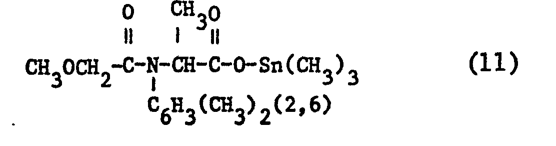

N-(1'-Trimethylzinnoxycarbonylethyl)-N-methoxyacetyl-2,6-dimethylanilin

Zu 15 Teilen N-(1'-Trimethylzinnoxycarbonylethyl)-2,6-dimethylanilin und 18 Teilen Triethylamin in 200 ml Toluol wurden 18 Teile Methoxyessigsäurechlorid zugetropft. Nach Abklingen der schwach exothermen Reaktion wurde 3 Stunden bei Raumtemperatur nachgerührt, vom Triethylaminhydrochlorid abfiltriert, die Reaktionslösung zweimal mit je 50 ml Wasser gewaschen, über Natriumsulfat getrocknet, filtriert und das Lösungsmittel abgedampft. Der ölige Rückstand wurde mit Ether digeriert und kristallisierte. Die beigen Kristalle wurden aus Chloroform/Petrolether (30-50°C) 1:1 umkristallisiert. Das so erhaltene Produkt schmolz bei 136-137°C.

Auf analoge Weise oder nach einer der beschriebenen Herstellungsvarianten sind auch die nachfolgend aufgeführten Verbindungen der Formel I erhältlich:

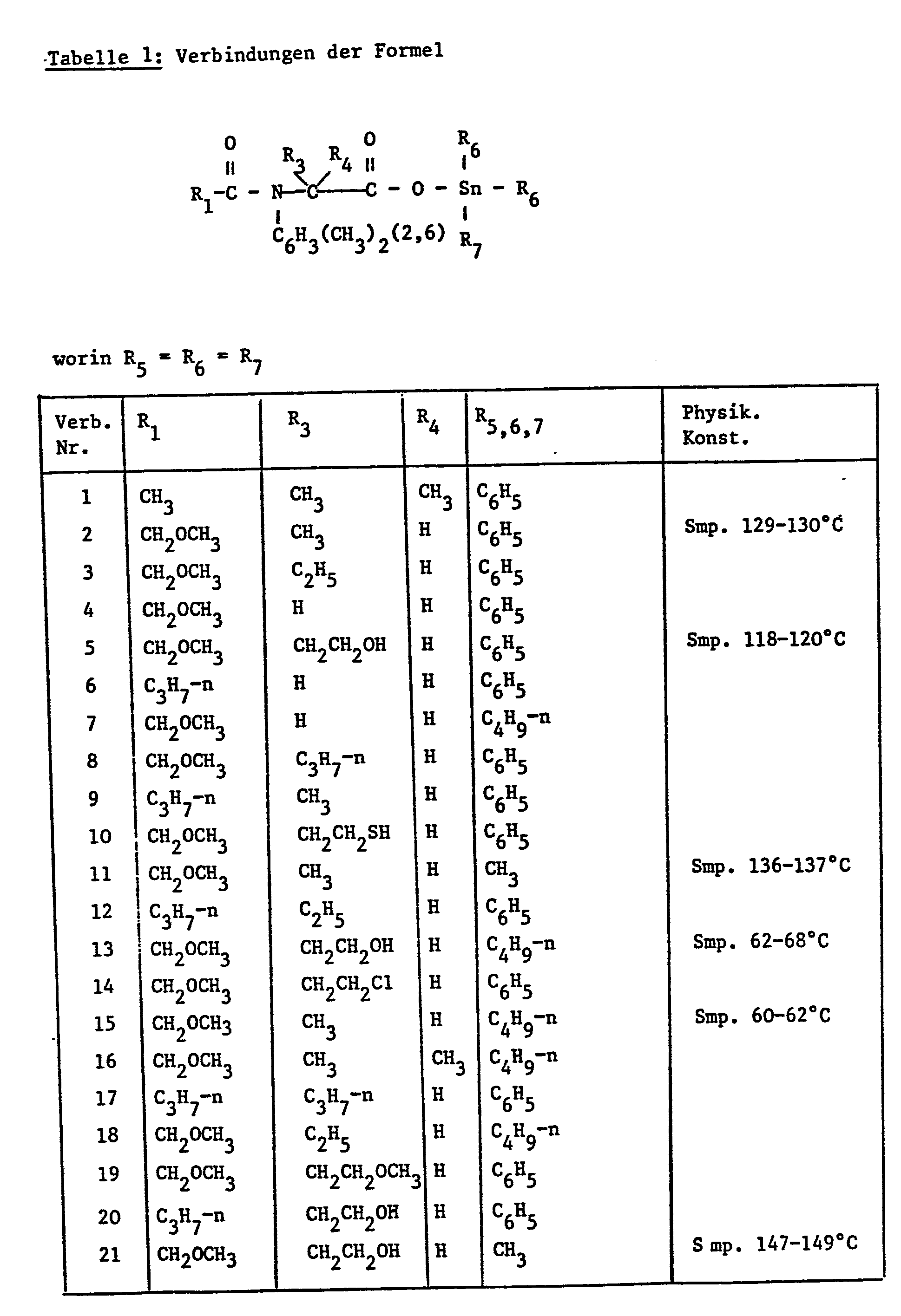

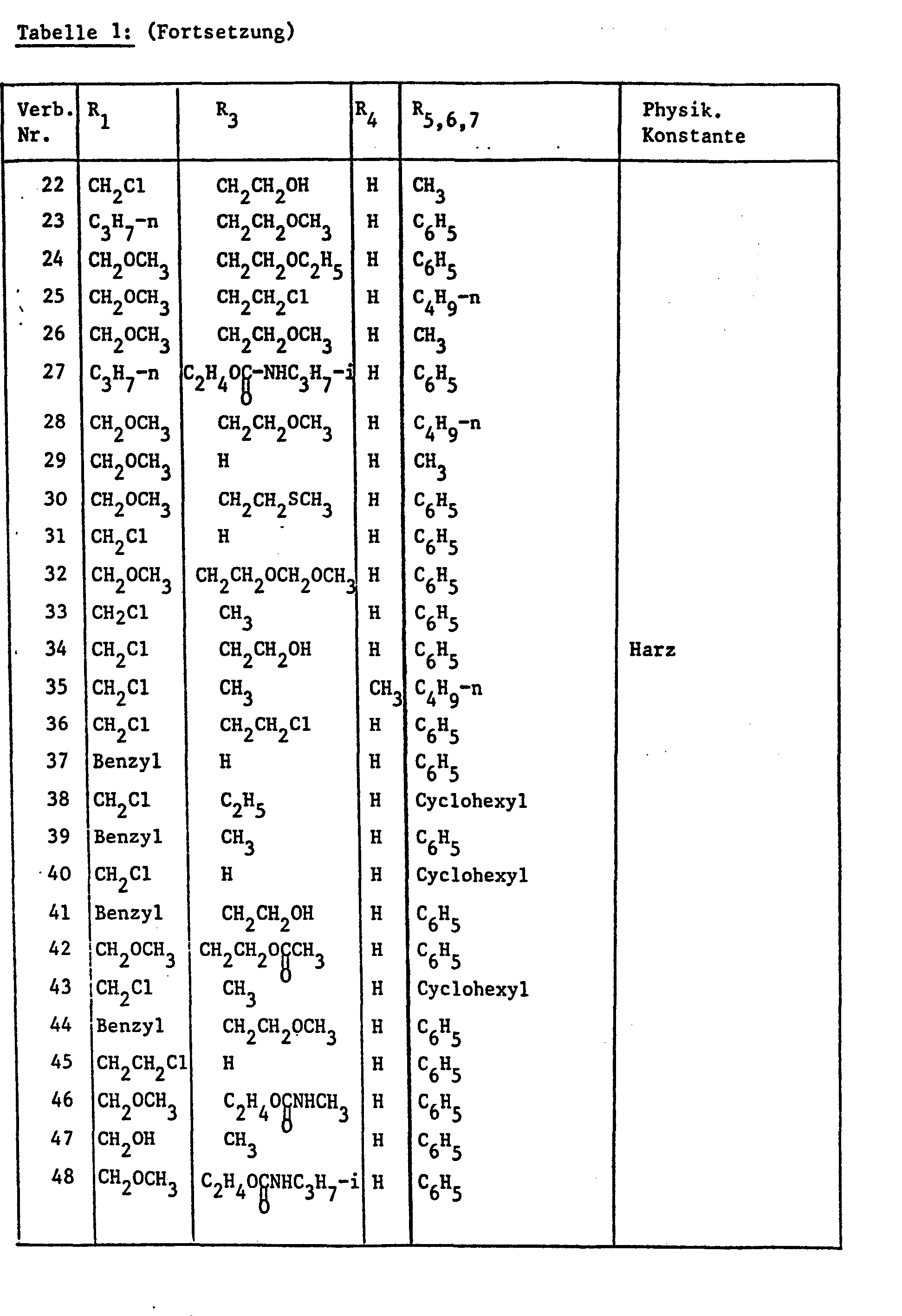

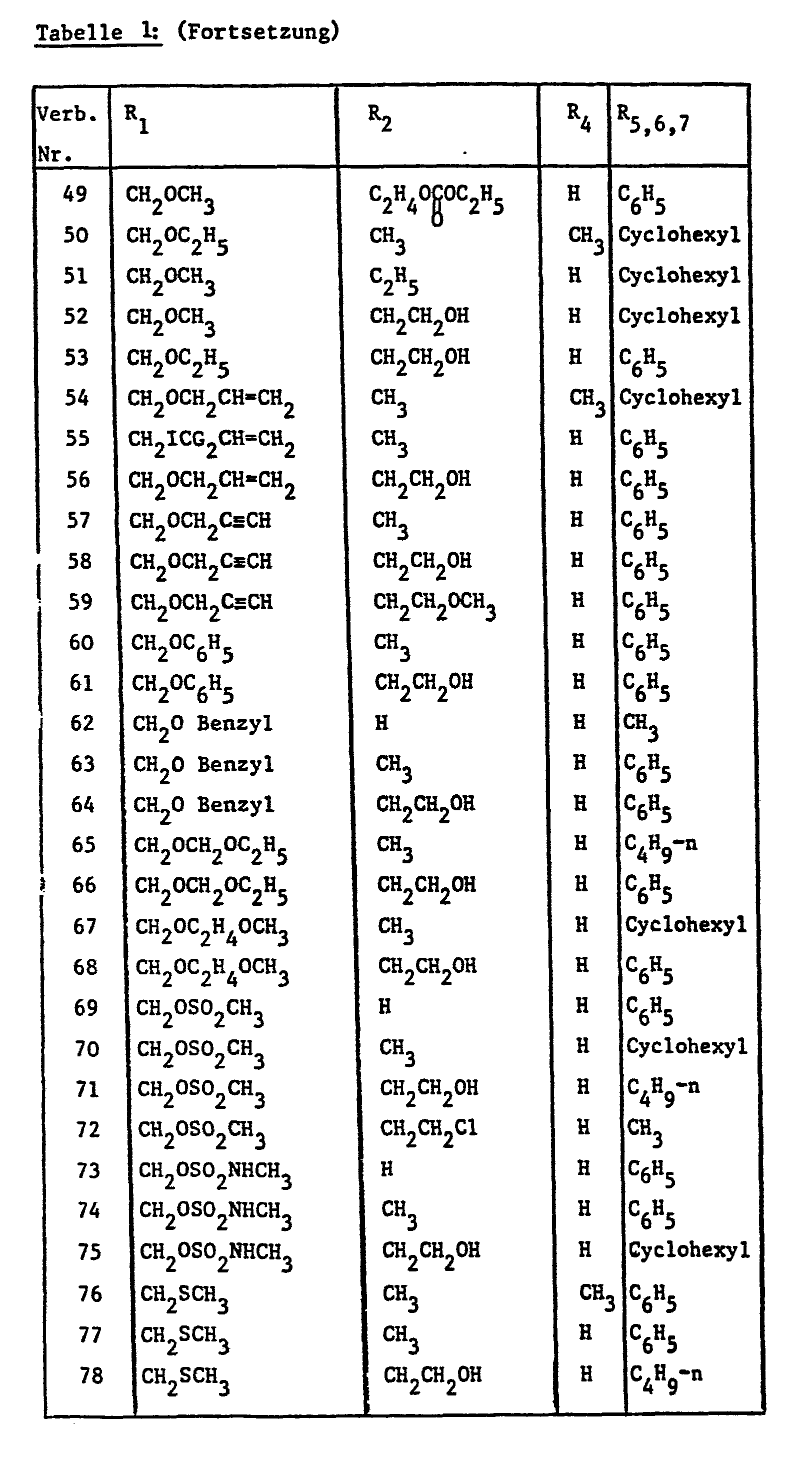

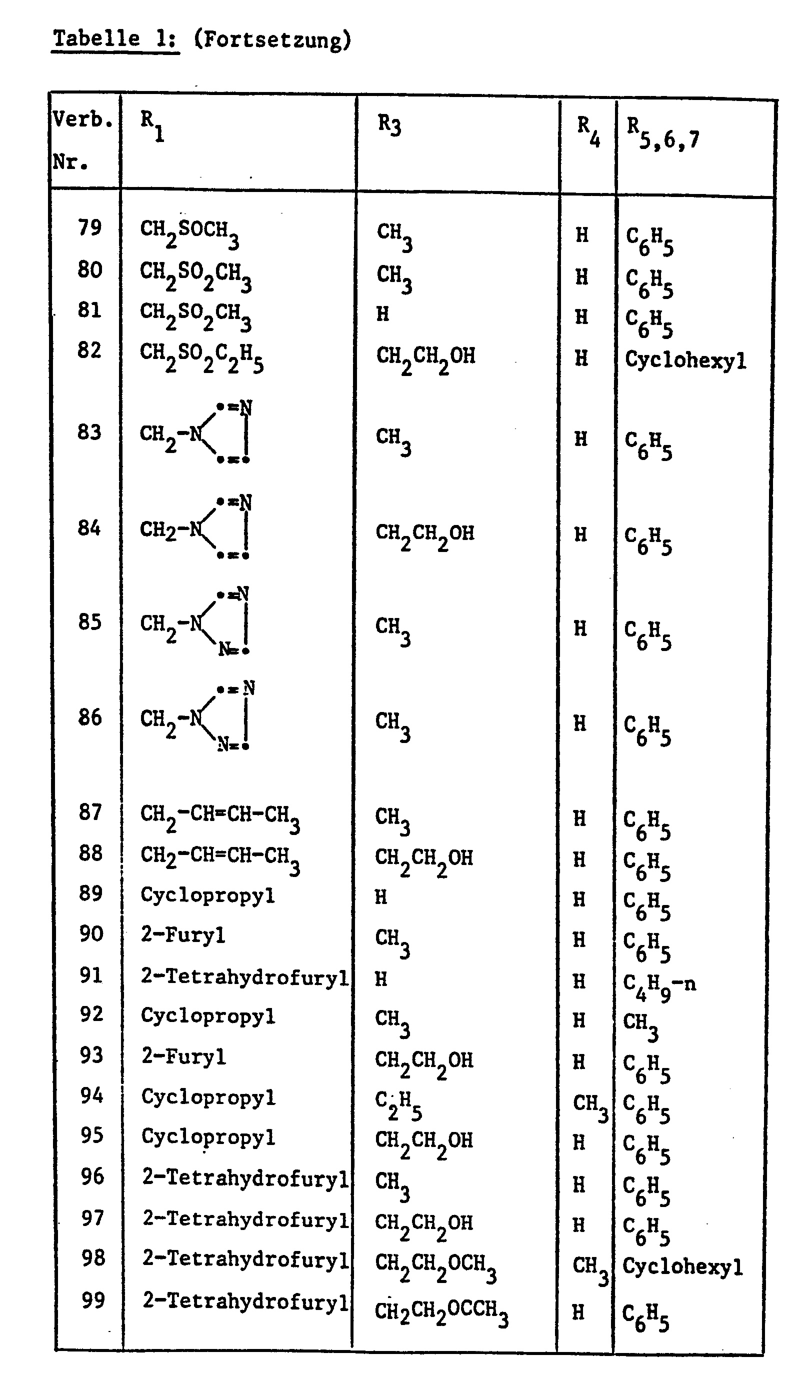

Formulierungsbeispiele für flüssige Wirkstoffe der Formel I

### (% = Gewichtsprozent)

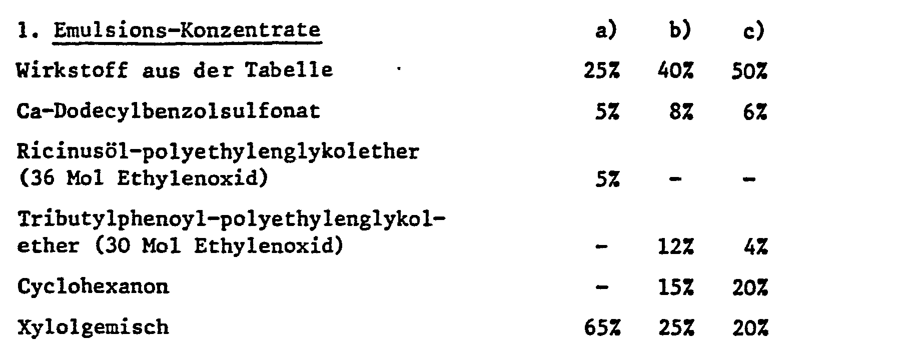

### Aus solchen Konzentraten können durch Verdünnen mit Wasser Emulsionen jeder gewünschten Konzentration hergestellt werden.

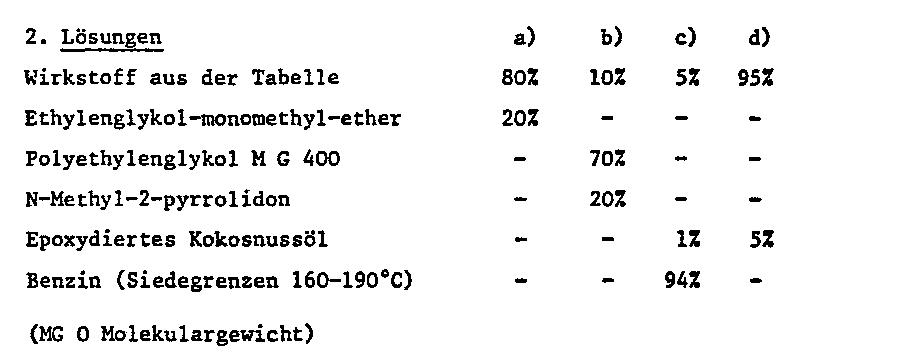

Die Lösungen sind zur Anwendung in Form kleinster Tropfen geeignet.

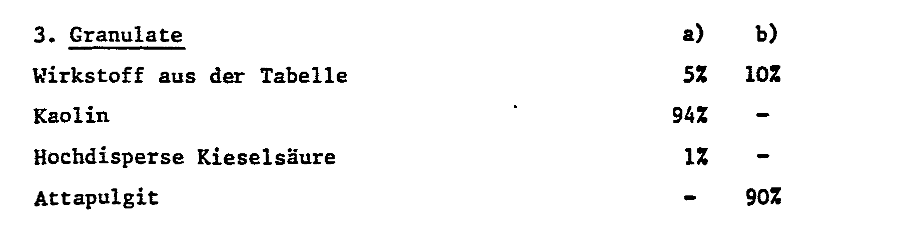

Der Wirkstoff wird in Methylenchlorid gelöst, auf den Träger aufgesprüht und das Lösungsmittel anschliessend im Vakuum abgedampft.

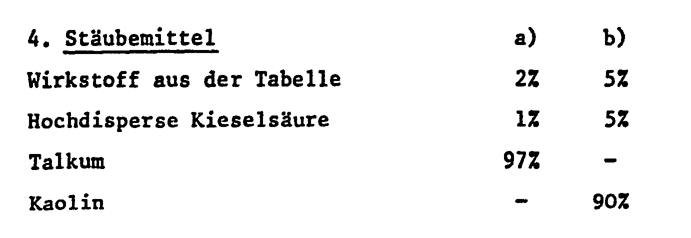

Durch inniges Vermischen auf Trägerstoffe mit dem Wirkstoff erhält man gebrauchsfertige Stäubemittel.

### Formulierungsbeispiele für feste Wirkstoffe der Formel I (% = Gewichtsprozent)

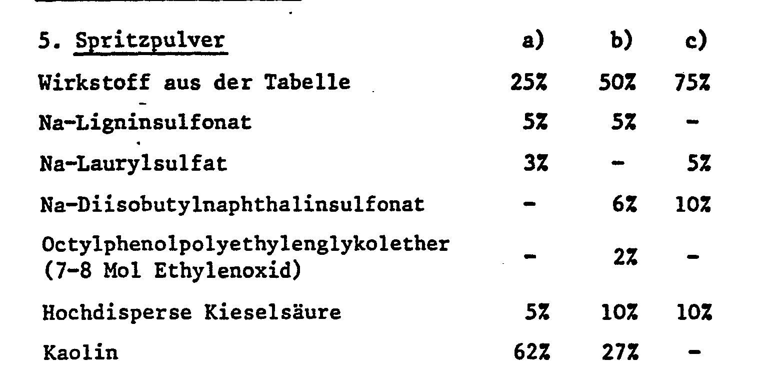

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

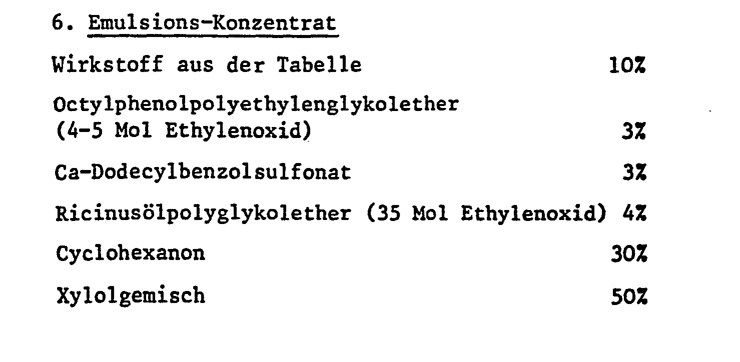

Aus diesem Konzentrat können durch Verdünnen mit Wasser Emulsionen jeder gewünschten Konzentration hergestellt werden.

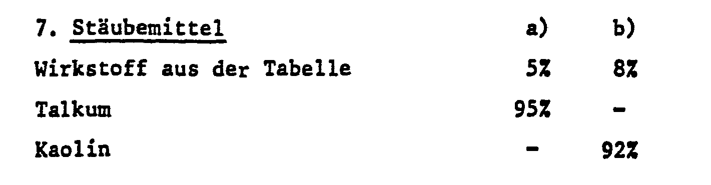

Man erhält anwendungsfertige Stäubemittel, indem der Wirkstoff mit dem Träger vermischt auf einer geeigneten Mühle vermahlen wird.

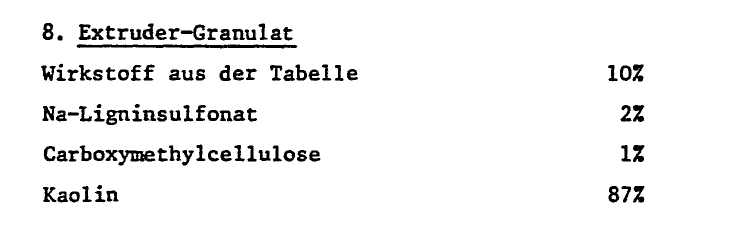

Der Wirkstoff wird mit den Zusatzstoffen vermischt, vermahlen und mit Wasser angefeuchtet. Dieses Gemisch wird extrudiert und anschliessend im Luftstrom getrocknet.

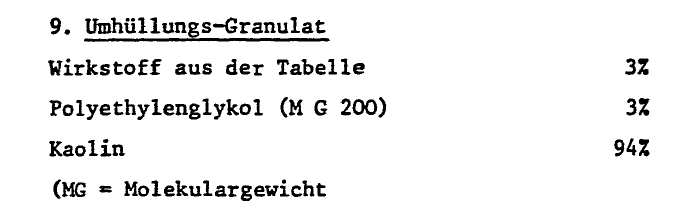

Der fein gemahlene Wirkstoff wird in einem Mischer auf das mit Polythylenglykol angefeuchtete Kaolin gleichmässig aufgetragen. Auf diese Weise erhält man staubfreie Umhüllungs-Granulate.

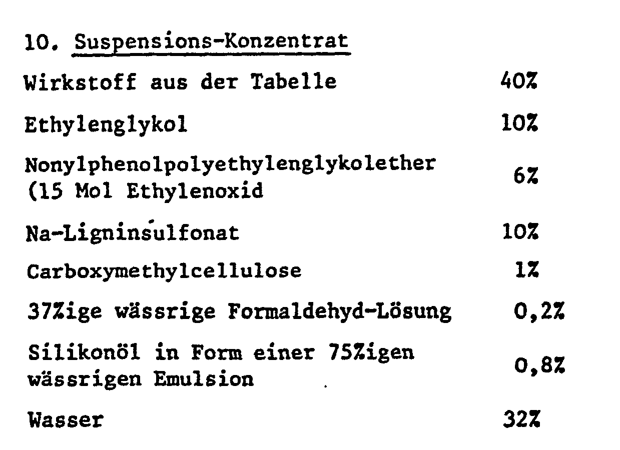

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Biologische Beispiele

### Beispiel 11: Wirkung gegen Puccinia graminis auf Weizen

### a) Residual-protektive Wirkung

Weizenpflanzen wurden 6 Tage nach der Aussaat mit einer aus Spritzpulver des Wirkstoffes hergestellten Spritzbrühe (0,06Z Aktivsubstanz) besprüht. Nach 24 Stunden wurden die behandelten Pflanzen mit einer Ureidosporensuspension des Pilzes infiziert. Nach einer Inkubation während 48 Stunden bei 95-100% relativer Luftfeuchtigkeit und ca. 20°C wurden die infizierten Pflanzen in einem Gewächshaus bei ca. 22°C aufgestellt. Die Beurteilung der Rostpustelnentwicklung erfolgte 12 Tage nach der Infektion.

### b) Systemische Wirkung

Zu Weizenpflanzen wurde 5 Tage nach Aussaat eine aus Spritzpulver des Wirkstoffes hergestellte Spritzbrühe gegossen (0,006X Aktivsubstanz bezogen auf das Bodenvolumen). Nach 48 Stunden wurden die behandelten Pflanzen mit einer Uredosporensuspension des Pilzes infiziert. Nach einer Inkubation während 48 Stunden bei 95-100% relativer Luftfeuchtigkeit und ca. 20°C wurden die infizierten Pflanzen in einem Gewächshaus bei ca. 22°C aufgestellt. Die Beurteilung der Rostpustelnentwicklung erfolgte 12 Tage nach der Infektion.

Verbindungen aus der Tabelle zeigten gegen Puccinia-Pilze eine gute Wirkung. Unbehandelte aber infizierte Kontrollpflanzen zeigten einen Puccinia-Befall von 100%. Unter anderen hemmten die Verbindungen 2, 11 und 21 den Puccinia-Befall auf 0 bis 5 Z.

Beispiel 12: Wirkung gegen Cercospora arachidicola auf Erdnusspflanzen

### a) Residual-protektive Wirkung

10-15 cm hohe Erdnusspflanzen wurden mit einer aus Spritzpulver der Wirksubstanz hergestellten Spritzbrühe (0,006% Aktivsubstanz) besprüht und 48 Stunden später mit einer Konidiensuspension des Pilzes infiziert. Die infizierten Pflanzen wurden während 72 Stunden bei ca. 21°C und hoher Luftfeuchtigkeit inkubiert und anschliessend bis zum Auftreten der typischen Blattflecken in einem Gewächshaus aufgestellt. Die Beurteilung der fungiziden Wirkung erfolgte 12 Tage nach der Infektion basierend auf Anzahl und Grösse der auftretenden Flecken.

### b) Systemische Wirkung

Zu 10-15 cm hohen Erdnusspflanzen wurde eine aus Spritzpulver des Wirkstoffes hergestellte Spritzbrühe gegossen (0,06% Aktivsubstanz bezogen auf das Erdvolumen). Nach 48 Stunden wurden die behandelten Pflanzen mit einer Konidiensuspension des Pilzes infiziert und 72 Stunden bei ca. 21°C und hoher Luftfeuchtigkeit inkubiert. Anschliessend wurden die Pflanzen im Gewächshaus aufgestellt und nach 11 Tagen der Pilzbefall beurteilt.

Im Vergleich zu unbehandelten, aber infizierten Kontrollpflanzen (Anzahl und Grösse der Flecken = 100Z), zeigten Erdnusspflanzen, die mit Wirkstoffen aus der Tabelle behandelt wurden, einen stark reduzierten Cercospora-Befall. So verhinderten die Verbindungen 2, 5, 11, 13 und 15 in obigen Versuchen das Auftreten von Flecken fast vollständig (0-10%).

### Beispiel 13: Wirkung gegen Erysiphae graminis auf Gerste

### a) Residual-protektive Wirkung

Ca. 8 cm hohe Gerstenpflanzen wurden mit einer aus Spritzpulver des Wirkstoffes hergestellten Spritzbrühe (0,06% Aktivsubstanz) besprüht. Nach 3-4 Stunden wurden die behandelten Pflanzen mit Konidien des Pilzes bestäubt. Die infizierten Gerstenpflanzen wurden in einem Gewächshaus bei ca. 22°C aufgestellt und der Pilzbefall nach 10 Tagen beurteilt.

### b) Systemische Wirkung

Zu ca. 8 cm hohen Gerstenpflanzen wurde eine aus Spritzpulver des Wirkstoffes hergestellte Spritzbrühe gegossen (0,02% Aktivsubstanz bezogen auf das Erdvolumen). Es wurde dabei darauf geachtet, dass die Spritzbrühe nicht mit den oberirdischen Pflanzenteilen in Berührung kam. Nach 48 Stunden wurden die behandelten Pflanzen mit Konidien des Pilzes bestäubt. Die infizierten Gerstenpflanzen wurden in einem Gewächshaus bei ca. 22°C aufgestellt und der Pilzbefall nach 10 Tagen beurteilt.

Verbindungen der Formel I zeigten eine Wirkung gegen Erysiphe-Pilze. Unbehandelte, aber infizierte Kontrollpflanzen zeigten einen Erysiphe-Befall von 100Z. Unter anderen Verbindungen aus der Tabelle hemmte die Verbindung Nr. 2 den Pilzbefall bei Gerste auf 0 bis 5%.

### Beispiel 14: Residual-protektive Wirkung gegen Venturi inaequalis auf Apfeltrieben

Apfelstecklinge mit 10-20 cm langen Frischtrieben wurden mit einer aus Spritzpulver des Wirkstoffes hergestellten Spritzbrühe (0,06% Aktivsubstanz) besprüht. Nach 24 Stunden wurden die behandelten Pflanzen mit einer Konidiensuspension des Pilzes infiziert. Die Pflanzen wurden dann während 5 Tagen bei 90-100% relativer Luftfeuchtigkeit inkubiert und während 10 weiteren Tagen in einem Gewächshaus bei 20-24°C aufgestellt. Der Schorfbefall wurde 15 Tage nach der Infektion beurteilt. Verbindungen Nr. 2 und 5 hemmten den Krankheitsbefall auf weniger als 10%. Unbehandelte aber infizierte Kontrolltriebe wurden dagegen 100%ig befallen.

### Beispiel 15: Wirkung gegen Botrytis cinerea auf Bohnen

### Residual protektive Wirkung

Ca. 10 cm hohe Bohnen-Pflanzen wurden mit einer aus Spritzpulver des Wirkstoffes hergestellten Spritzbrühe (0,02% Aktivsubstanz) besprüht. Nach 48 Stunden wurden die behandelten Pflanzen mit einer Konidiensuspension des-Pilzes infiziert. Nach einer Inkubation der infizierten Pflanzen während 3 Tagen bei 95-100X relativer Luftfeuchtigkeit und 21°C erfolgte die Beurteilung des Pilzbefalls. Die Verbidnungen aus der Tabelle hemmten in vielen Fällen die Pilzinfektion sehr stark. Bei einer Konzentration von 0,02X erwies sich z.B. die Verbindung Nr. 2 als voll wirksam. Der Krankheitsbefall lag bei 0 bis 8X.

Der Botrytis-Befall unbehandelter aber infizierter Bohnenpflanzen betrug 100%.

### Beispiel 16: Wirkung gegen Ph^{y}tophthora infestans auf Tomatenpflanzen

### a) Residual-protektive Wirkung

Tomatenpflanzen wurden nach 3-wöchiger Anzucht mit einer aus Spritzpulver des Wirkstoffes hergestellten Spritzbrühe (0,06% Aktivsubstanz) besprüht. Nach 24 Stunden wurden die behandelten Pflanzen mit einer Sporangiensuspension des Pilzes infiziert. Die Beurteilung des Pilzbefalls erfolgte nach einer Inkubation der infizierten Pflanzen während 5 Tagen bei 90-100Z relativer Luftfeuchtigkeit und 20°C.

### b) Systemische Wirkung

Zu Tomatenpflanzen wurde nach 3-wöchiger Anzucht eine aus Spritzpulver des Wirkstoffes hergestellte Spritzbrühe gegossen (0,06X Aktivsubstanz bezogen auf das Erdvolumen). Es wurde dabei darauf geachtet, dass die Spritzbrühe nicht mit den oberirdischen Pflanzenteilen in Berührung kam. Nach 48 Stunden wurden die behandelten Pflanzen mit einer Sporangiensuspension des Pilzes infiziert. Die Beurteilung des Pilzbefalls erfolgte nach einer Inkubation der infizierten Pflanzen während 5 Tagen bei 90-100% relativer Luftfeuchtigkeit und 20°C.

Unter anderen zeigten in obigen Versuchen die Verbindungen Nr. 2 5 und 13 eine sehr gute Phytophtora-Wirkung. Gegenüber unbehandelten Kontrollpflanzen (100% Befall) bewirkten diese Verbindungen eine fast vollständige Unterdrückung des Pilzbefalls (0 bis 5%).

### Beispiel 17: Körnerschutz ("Grainpresservative Test")

### a) Kurzzeittest gegen Schimmelpilze an Feucht-Mais

Trockene, als Tierfutter vorgesehene Maiskörner (Portionen ä 80 g) werden in verschliessbaren Plastikbechern mit Wirkstoffen der Formel I in Form einer wässrigen Suspension, Emulsion oder Lösung gut durchmischt. Die Substanzapplikation wird so bemessen, dass eine Konzentration von 0,06% AS bezüglich des Maistrockengewichts erreicht wird. Ein befeuchteter Papierlappen sorgt für eine feuchtigkeitsgesättigte Atmosphäre in den mit Mais gefüllten und anschliessend verschlossenen Bechern. Nach 2-3 Wochen Inkubation bei ca. 20°C entwicklt sich bei den nur mit Wasser behandelten Mais-Proben spontan eine Mischpopulation von.Schimmelpilzen. Eine künstliche Infektion erübrigt sich. Das Aᵤsmass der Pilzentwicklung nach 3 Wochen dient zur Bewertung der Wirksamkeit der Wirkstoffe der Formel I.

### b) Langzeittest gegen Schimmelpilze an Feucht-Mais

I Die Mais-Proben, die nach 3 Wochen keinen Pilzbefall aufweisen, werden während zwei weiteren Monaten inkubiert. Nach jedem Monat erfolgt eine visuelle Bonitur nach denselben Kriterien wie im a-Test.

II Die Testdurchführung erfolgt grundsätzlich gleich wie unter a und b, doch wird der Wirkstoff der Formel I bei 2000, 600 und 200 ppm AS (bezogen auf das Maistrockengewicht) während 6 Monaten geprüft.

Durch Behandlung mit Wirkstoffen der Formel I, insbesondere mit den Verbindungen Nr. 5, 13, 15, 20 und 21, wurde die Bildung von Schimmelpilzen an Feuchtmais in allen drei Tests a, bI und bII sowohl kurzfristig (3 Wochen) als auch langfristig (6 Monate) vollständig unterdrückt. Selbst bei einer Prüfkonzentration von 200 ppm AS zeigte der Mais nach 6 Monaten fast keinen Befall.

In ähnlichen Versuchen, bei denen anstatt Futtermais wahlweise Futtergetreide (Hafer), Heu, Rübenschnitzel oder Saubohnen verwendet wurden, zeigten gleichartige Resultate eines mehrmonatigen Dauerschutzes bei Behandlung mit obigen Wirksubstanzen.

Die unbehandelten Vergleichsproben waren alle völlig verschimmelt und ungeniessbar.

## Patentansprüche

Patentansprüche (fur alle benannten Länder ausser Oesterreich)

1. Neue zinnorganische Verbindungen der allgemeinen Formel I 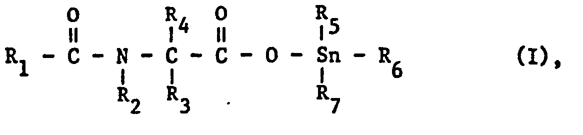 worin
R₁ gegebenenfalls substituiertes Niederalkyl, Niederalkenyl, Cycloalkyl, Furyl oder Tetrahydrofuryl bedeutet;
R₂ gegebenenfalls substituiertes Aryl darstellt;
R₃ und R₄ unabhängig voneinander für Wasserstoff oder gegebenenfalls substituiertes Niederalkyl stehen; und -
_{R52 R6} und _{R7} unabhängig voneinander gegebenenfalls substituiertes Niederalkyl, Cycloalkyl oder Aryl repräsentieren.

2. Verbindungen nach Anspruch 1 der Formel I, worin
R₁ für ein durch Chlor, Methoxy, Ethoxy, CH₂=CHCH₂O-, HC≡CCH₂O-, CH₃OCH₂O-, Methylsulfonyl, Methylsulfonyloxy, Methylaminosulfonyloxy, Methylthio oder 1H-1,2,4-Triazolyl substituiertes Methyl, für C₂₋C₄₋Alkenyl, durch Chlor substituiertes C₂₋C₄₋Alkenyl, C₃₋C₆₋Cycloalkyl, unsubstituiertes 2-Tetrahydrofuryl oder unsubstituiertes oder durch Brom substituiertes 2-Furyl steht;
R₂ ein in beiden ortho-Positionen und gegebenenfalls zusätzlich in metha-Position durch Chlor, Methyl, Methoxy, -CF₃ und/oder Nitro substituiertes Phenyl oder ein in ortho-Stellung durch Chlor, Methyl, Methoxy, -CF₃ oder Nitro substituiertes a-Naphthyl bedeutet;
R₃ für Wasserstoff, C₁-C₂-Alkyl, Hydroxyethyl, Methoxyethyl, Methoxymethyl oder Chlorethyl steht;
R₄ Wasserstoff bedeutet; und R₅, R₆ und R₇ unabhängig voneinander Methyl, n-Butyl, Cyclohexyl oder Phenyl bedeuten.

3. Verbindungen nach Anspruch 2 der Formel I, worin
R₁ für ein durch Chlor, Methoxy, Ethoxy, CH₂=CHCH₂O-, HC≡CCH₂O- Methoxymethoxy oder 1H-1,2,4-Triazolyl, substituiertes Methyl,für Cyclopropyl, 2-Furyl oder 2-Tetrahydrofuryl steht;
R₂ ein durch Chlor, Methyl, Methoxy, CF₃ und/oder Nitro diortho-substituiertes Phenyl bedeutet;
R₃ für Wasserstoff, C₁-C₂-Alkyl, Hydroxyethyl, Methoxyethyl, Methoxymethyl oder Chlorethyl steht;
R₄ Wasserstoff bedeutet; und R₅, R₆ und R₇ unabhängig voneinander für Methyl, n-Butyl, Cyclohexyl oder Phenyl stehen.

4. Verbindungen nach Anspruch 1 der Formel I, worin R₁ für Methoxymethyl steht; R₂ ein durch Chlor, Methyl, Methoxy, CF₃ und/oder Nitro diortho-substituiertes Phenyl bedeutet; R₃ für Methyl oder Hydroxymethyl steht; R₄ Wasserstoff bedeutet und R₅, R₆ und R₇ unabhängig voneinander für C₁-C₄-Alkyl, C₃₋C₆₋Cycloalkyl oder Phenyl stehen.

5. Verbindungen nach Anspruch 4 der Formel I, worin R₁ für Methoxymethyl steht; R₂ 2,6-Dimethylphenyl bedeutet; R₃ für Methyl oder Hydroxymethyl steht; R₄ Wasserstoff bedeutet und R₅, ^{R}₆ und R₇ für C₁-C₄-Alkyl oder Phenyl stehen.

6. Eine Verbindung der Formel I, ausgewählt aus der Reihe:
N-(1'-Triphenylzinnoxycarbonylethyl)-N-methoxyacetyl-2,6-dimethylanilin, N-1'-Triphenylzinnoxycarbonyl-(prop-3-ol-lyl)]-N-methoxyacetyl-2,6-dimethylanilin,
N-(1'-Trimethylzinnoaycarbonylethyl)-N-methoxyacetyl-2,6-dimethylanilin,
N-[1'-Tri-n-butylzinnoaycarbonyl-(prop-3-ol-1-yl)]-N-methoxyacetyl-2,6-dimethylanilin,
N-(1'-Tri-n-butylzinnoxycarbonylethyl)-N-methoxyacetyl-2,6-dimethylanilin,
N-[1'-Trimethylzinnoxycarboayl-(prop-3-oll-yl)]-N-methoxyacetyl-2,6-dimethylanilin.

7. Verfahren zur Herstellung der in Anspruch 1 definierten Verbindungen der Formel I, dadurch gekennzeichnet, dass man in An- oder Abwesenheit reaktionsinerter Lösungs- oder Verdünnungsmittel gegebenenfalls in Gegenwart eines säurebindenden Mittels entweder eine Verbindung der Formel II 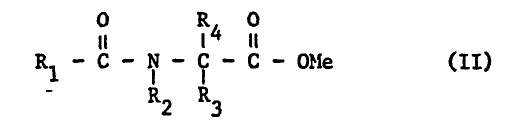 mit einem Triorganylzinnhalogenid der Formel III 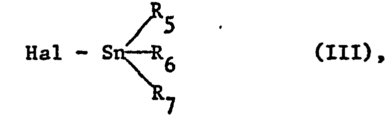 umsetzt; oder eine Verbindung der Formel IV 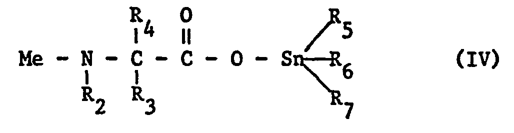 mit einem reaktionsfähigen Säurederivat der Formel V 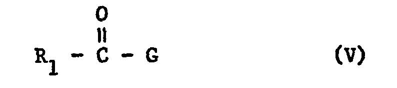 N-acyliert; oder eine Verbindung der Formel VI 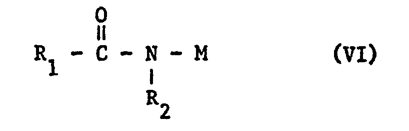 mit einer Verbindung der Formel VII 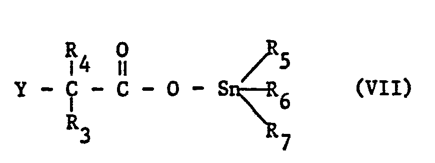 umsetzt, wobei die Substituenten R₁ bis R₇ in den Formeln II bis VII, die unter Formel I angegebenen Bedeutungen haben, Me für Wasserstoff oder ein Metallatom steht, Hal ein Halogenatom repräsentiert, G für die Gruppe R₁-COO-, eine freie oder derivatisierte Hydroxygruppe oder ein Halogenatom steht und Y eine nukleofuge Abgangsgruppe darstellt.

8. Schädlingsbekämpfungsmittel zur Bekämpfung und/oder Verhütung eines Befalls von Pflanzen durch phytopathogene Pilze, Bakterien oder Insekten, dadurch gekennzeichnet, dass es als mindestens eine aktive Komponente eine Verbindung der Formel I gemäss Anspruch 1 enthält. -

9 . Mittel gemäss Anspruch 8, dadurch gekennzeichnet, dass es als aktive Komponente mindestens eine der in den Ansprüchen 1 bis ₆ definierten Verbindungen enthält.

10. Verfahren zur Bekämpfung oder Verhütung eines Befalls von Kulturpflanzen durch phatopathogene Schädlinge, dadurch gekennzeichnet, dass man eine Verbindung der Formel I gemäss einem der Ansprüche 1 bis 6 auf die Pflanze oder deren Standort appliziert.

11. Verwendung von Verbindungen der Formel I gemäss Anspruch 1 zur Bekämpfung und/oder zur präventiven Verhütung eines Befalls von Pflanzen durch Pilze, Bakterien oder Insekten.

_{'}12. Verwendung nach Anspruch 10 von Verbindungen der Formel I gemäss einem der Ansprüche 2 bis 6.

13. Verwendung gemäss einem der Ansprüche 11 oder 12 gegen Pilze aus den Klassen Ascomycetes, Basidiomycetes oder Fungi imperfecti. Patentansprüche (für Oesterreich)

1. Schädlingsbekämpfungsmittel zur Bekämpfung und/oder Verhütung eines Befalls von Pflanzen durch phytopathogene Pilze, Bakterien oder Insekten, dadurch gekennzeichnet, dass es als mindestens eine aktive Komponente eine neue zinnorganische Verbindung der allgemeinen Formel I 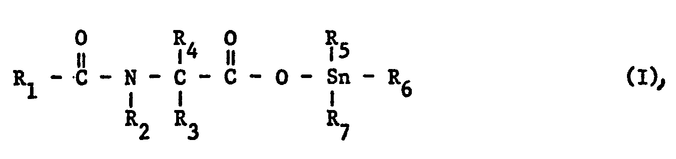 enthält, worin
R₁ gegebenenfalls substituiertes Niederalkyl, Niederalkenyl, Cycloalkyl, Furyl oder Tetrahydrofuryl bedeutet;
R₂ gegebenenfalls substituiertes Aryl darstellt;
R₃ und R₄ unabhängig voneinander für Wasserstoff oder gegebenenfalls substituiertes Niederalkyl stehen; und
R₅, R₆ und R₇ unabhängig voneinander gegebenenfalls substituiertes Niederalkyl, Cycloalkyl oder Aryl repräsentieren.

2. Mittel nach Anspruch 1, dadurch gekennzeichnet, dass es als aktive Komponente mindestens eine neue Verbindung der Formel I enthält, worin
R₁ für ein durch Chlor, Methoxy, Ethoxy, CH₂=CHCH₂O-, HC≡CCH₂O-, CH₃OCH₂0-, Methylsulfonyl, Methylsulfonyloxy, Methylaminosulfonyloxy, Methylthio oder 1H-1,2,4-Triazolyl substituiertes Methyl, für C₂-C₄-Alkenyl, durch Chlor substituiertes C₂-C₄-Alkenyl, C₃-C₆-Cycloalkyl, unsubstituiertes 2-Tetrahydrofuryl oder unsubstituiertes oder durch Brom substituiertes 2-Furyl steht;
R₂ ein in beiden ortho-Positionen und gegebenenfalls zusätzlich in metha-Position durch Chlor, Methyl, Methoxy, -CF₃ und/oder Nitro substituiertes Phenyl oder ein in ortho-Stellung durch Chlor, Methyl, Methoxy, -CF₃ oder Nitro substituiertes a-Naphthyl bedeutet;
R₃ für Wasserstoff, Cₗ₋C₂₋Alkyl, Hydroxyethyl, Methoxyethyl, Methoxymethyl oder Chlorethyl steht;
R₄ Wasserstoff bedeutet; und R₅, R₆ und R₇ unabhängig voneinander Methyl, n-Butyl, Cyclohexyl oder Phenyl bedeuten.

3. Mittel nach Anspruch 2, dadurch gekennzeichnet, dass es als aktive Komponente mindestens eine Verbindung der Formel I enthält, worin
R₁ für ein durch Chlor, Methoxy, Ethoxy, GH₂=CHCH₂O-, HC≡CCH₂O- Methoxymethoxy oder 1H-1,2,4-Triazolyl, substituiertes Methyl, für Cyclopropyl, 2-Furyl oder 2-Tetrahydrofuryl steht;
R₂ ein durch Chlor, Methyl, Methoxy, CF₃ und/oder Nitro diorthosübstituiertes Phenyl bedeutet;
^{R}₃ für Wasserstoff, C₁-C₂-Alkyl, Hydroxyethyl, Methoxyethyl, Methoxymethyl oder Chlorethyl steht;
R₄ Wasserstoff bedeutet; und R₅, R₆ und R₇ unabhängig voneinander für Methyl, n-Butyl, Cyclohexyl oder Phenyl stehen.

4. Mittel nach Anspruch 1, dadurch gekennzeichnet, dass es als aktive Komponente mindestens eine Verbindung der Formel I enthält, worin R₁ für Methoxymethyl steht; R₂ ein durch Chlor, Methyl, Methoxy,,CF₃ und/oder Nitro diortho-substituiertes Phenyl bedeutet; R₃ für Methyl oder Hydroxymethyl steht; R₄ Wasserstoff bedeutet und R₅, R₆ und R₇ unabhängig voneinander für Cₗ₋C₄₋Alkyl, C₃₋C₆₋Cycloalkyl oder Phenyl stehen.

5. Mittel nach Anspruch 4, dadurch gekennzeichnet, dass es als aktive Komponente mindestens eine Verbindung der Formel I enthält, worin _{R1} für Methoxymethyl steht; R₂ 2,6-Dimethylphenyl bedeutet; R₃ für Methyl oder Hydroxymethyl steht; R₄ Wasserstoff bedeutet und R₅, R₆ und R₇ für C₁-C₄-Alkyl oder Phenyl stehen.

6. Mittel nach Anspruch 1, dadurch gekennzeichnet, dass es als aktive Komponente mindestens eine der nachfolgend aufgezählten Verbindungen der Formel I enthält, nämlich
N-(1'-Triphenylzinnoxycarbonylethyl)-N-methoxyacetyl-2,6-dimethylanilin, N-[1'Triphenylzinnoxycarbonyl-(prop-3-ol-lyl)]-N-methoxyacetyl-2,6-dimethylanilin,
N-(1'-Trimethylzinnoxycarbonylethyl)-N-methoxyacetyl-2,6-dimethylanilin,
N-[1'-Tri-n-butylzinnoxycarbonyl-(prop-3-ol-1-yl)]-N-methoxyacetyl-2,6-dimethylanilin,
N-(1'-Tri-n-butylzinnoxycarbonylethyl)-N-methoxyacetyl-2,6-dimethylanilin oder
N-[1'-Trimethylzinnoxycarbonyl-(prop-3-ol-1 -yl)]-N-methoxyacetyl-2,6-dimethylanilin.

7. Verfahren zur Herstellun der in Anspruch 1 definierten Verbindungen der Formel I, dadurch gekennzeichent, dass man in An- oder Abwesenheit reaktionsinerter Lösungs- oder Verdünnungsmittel gegebenenfalls in Gegenwart eines säurebindenden Mittels entweder eine Verbindung der Formel II 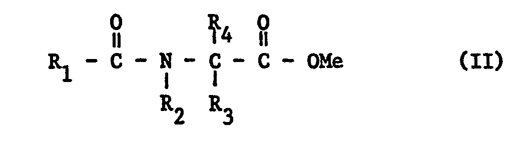 mit einem Triorganylzinnhalogenid der Formel III 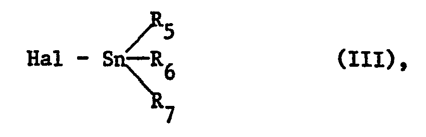 umsetzt; ode:
eine Verbindung der Formel IV 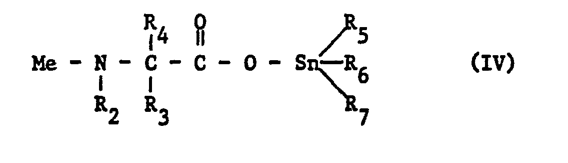 mit einem reaktionsfähigen Säurederivat der Formel V 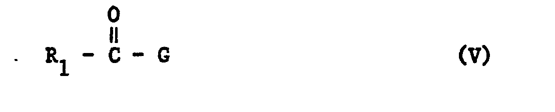 N-acyliert; oder eine Verbindung der Formel VI 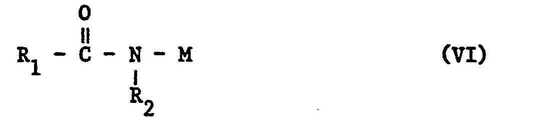 mit einer Verbindung der Formel VII 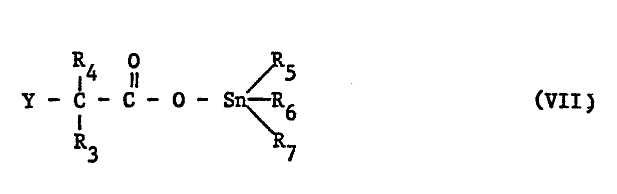 umsetzt, wobei die Substituenten R₁ bis R₇ in den Formeln II bis VII, die unter Formel I angegebenen Bedeutungen haben, Me für Wasserstoff oder ein Metallatom steht, Hal ein Halogenatom repräsentiert, G für die Gruppe R₁-COO-, eine freie oder derivatisierte Hydroxygruppe oder ein Halogenatom steht und Y eine nukleofuge Abgangsgruppe darstellt.

8. Verfahren zur Bekämpfung eines Befalls von Kulturpflanzen durch phytopathogene Schädlinge, dadurch gekennzeichnet, dass man ein Mittel gemäss einem der Ansprüche 1 bis 6 auf die Pflanze oder deren Standort appliziert.

9. Verwendung von in den Ansprüchen 1 bis 6 definierten Verbindungen der Formel I zur Bekämpfung und/oder zur präventiven Verhütung eines Befalls von Pflanzen durch Pilze, Bakterien oder Insekten.

10. Verwendung gemäss Anspruch 9 gegen Pilze aus den Klassen Ascomycetes, Basidiomycetes oder Fungi imperfecti.
